# EUROPEAN PATENT APPLICATION

(11) **EP 1 993 033 A1**
(43) Date of publication of application: **19.11.2008**
(21) Application number: 07108322.4
(22) Date of filing: 16.05.2007
(51) Int. Cl.: G06F 9/44, G05B 23/02, G05B 19/418

(54) **Method, controller, monitoring apparatus, control system, and computer program for online viewing**

(71) Applicant: Tac AB, 213 75 Malmö (SE)
(72) Inventor: Vennerstrand, Anders, 240 14 Veberöd (SE)
(74) Representative: Milanov, Nina Vendela Maria

(57) **Abstract**

A method comprising selecting at least one of a plurality of executing control applications; and providing information on at least one internal variable of said at least one of a plurality of executing control applications is disclosed. Further, a controller, a monitoring apparatus, a control system, and a computer program for implementing the method are disclosed.

## Description

### Technical field

The present invention relates to a method, a controller, a monitoring apparatus, a control system, and a computer program for provision of internal variables of control applications.

### Background of the invention

In modern facilities, such as buildings or large vessels, advanced control is used to keep energy cost at a reasonable level at the same time as keeping comfort and functionality at a high level. Control is traditionally directed towards heating, ventilation, and air-conditioning (HVAC), but becomes more and more also integrated with lighting, safety arrangements, access control, asset management, etc. Complexity of the systems used for control of modern facilities put demand on maintainability and also make behaviour of controlling harder to predict. In process industry, complex control has been widely used, as for example disclosed in US 6,952,808 B1, and has been possible mostly for two reasons: 1) the process operators are highly skilled and thus their work is only directed to operating the process or parts of it, and 2) the industrial process is designed to be predictable and thus the complex control can be dedicated to the specific process. However, in facility control, a larger flexibility is demanded, both with regard to the environment in which controlling is supposed to be performed where use of the facilities may change over time, and with regard to the persons operating the facility control systems, who normally also are supposed to perform a large variety of other work, such as changing light bulbs, taking care of mail service, etc. Therefore, there is a need for the supplier of the facility control system or its service network to be able to in a first instance be able to provide a turn-key control system in a facility, or in a second instance, be able to provide support to the everyday operator of the control system when needed.

### Summary of the invention

In view of the above, an objective of the invention is to solve or at least reduce the problems discussed above. In particular, an objective is to be enable checking of a control mechanism and its function, preferably when the control mechanism is running in its actual environment and performing its assigned task.

The present invention is based on the understanding that behaviour of a complex control mechanism is hard to predict for all situations, and that those situations sometimes show up when the control mechanism is working in its actual environment, i.e. executing its control task. The inventors have realised that a feasible way of coping with these situations is to check the actual behaviour of the control mechanism acting in the situation in question. The inventors then realised that gaining understanding of the function of the control mechanism could be improved by knowing not only input and output values of the control mechanism, but also internal values from within the control mechanism.

According to a first aspect of the present invention, there is provided a method comprising selecting at least one of a plurality of executing control applications; and providing information on at least one internal variable of said at least one of a plurality of executing control applications.

The term 'providing information' should in this context be construed as making information available, for example for illustrating, displaying, analyzing, indicating, communicating, etc.

The selection of control applications can be performed upon user interaction, or by design of the monitoring mechanism.

The method may further comprise selecting said at least one internal variable of said selected at least one control application.

The method may further comprise viewing said information on said at least one variable through a user interface. The user interface may comprise a web browser, wherein said viewing is performed by said web browser. The viewing of the information on the at least one variable may further comprise viewing the information in an illustration of a context of the at least one variable. The illustration of the context may comprise a schematic view of the control application. Boolean variables may cause associated connections of the illustration to change appearance.

The method may comprise enabling a user to change at least one of said at least one internal variable through the user interface. The method may comprise enabling a user to lock a value of at least one of said at least one internal variable through said user interface. Thereby, tests and engineering can be performed on the control mechanism, e.g. effects and hypotethical cases can be evaluated.

The method may further comprise accessing said plurality of executing control applications via a communication network. The method may further comprise viewing items associated with said plurality of executing control applications by a web browser. The selecting may comprise graphical user interface interaction with said viewed items being associated with the at least one executing control application to be selected.

The method may be performed in real time during control operation performed by said plurality of control applications.

According to a second aspect of the present invention, there is provided a controller comprising a processor arranged to execute at least one control application, a variable engine arranged to provide information on at least one internal variable of said at least one executing control application, and a communication means comprising a transmitter arranged to transmit information on said provided at least one internal variable.

The communication means may further comprise a receiver arranged to receive a selection of at least one of said at least one executing control application. The receiver may be further arranged to receive a selection of at least one internal variable of said selected at least one control application, and wherein said variable engine is arranged to provide information on said selected at least one internal variable.

The receiver may be arranged to receive a changed value for at least one of said at least one internal variable, wherein the processor may be arranged to set said at least one of said at least one internal variable to the changed value. The receiver may be arranged to receive a lock value for at least one of said at least one internal variable, wherein the processor may be arranged to set said at least one of said at least one internal variable to a locked value.

The communication means may be connected to a communication network.

The controller may be arranged to transmit said information on said at least one internal variable in real time during control operation performed by said at least one control application.

The variable engine may comprise a variable server arranged to provide said internal variables.

The information on said at least one variable may further comprise information on viewing said information in an illustration of a context of said at least one variable. The illustration of said context may comprise a schematic view of said control application. A boolean variable may be arranged to cause an associated connection of said illustration to change appearance.

The variable engine may further be arranged to provide information on any of a group comprising: input value, output value, state, and alarm.

The controller may further be arranged to handle a subscription on information provided by said variable engine.

According to a third aspect of the present invention, there is provided a control system comprising a controller according to the second aspect of the present invention, and at least one control object controlled by said controller, wherein said controller is arranged to select said at least one executing control application, and transmit information on said provided at least one internal variable.

The control system may further comprise a monitoring apparatus arranged to send a request to said controller, wherein said selection of said at least one executing control application is based on said request, and said transmitted information is transmitted to said monitoring apparatus. The monitoring apparatus may be arranged to receive a user input comprising a changed value for at least one of said at least one internal variable and transmit the changed value to the controller, wherein the controller may change the value of said at least one of said at least one internal variable to the changed value. The monitoring apparatus may be arranged to receive a user input comprising a lock value for at least one of said at least one internal variable and transmit the lock value to the controller, wherein the controller may lock the value of said at least one of said at least one internal variable to a locked value. The communication between said monitoring apparatus and said controller may be performed via a communication network.

The monitoring apparatus may be arranged to receive said information on said at least one internal variable in real time during control operation performed by said at least one control application.

The monitoring apparatus may comprise a presentation means for viewing information on said at least one internal variable. The presentation means may comprise a variable client arranged to illustrate said internal variables. The presentation means may comprise a browser.

The viewing of said information on said at least one variable may further comprise viewing said information in an illustration of a context of said at least one variable. The illustration of said context may comprise a schematic view of said control application. A boolean variable may cause an associated connection of said illustration to change appearance.

According to a fourth aspect of the present invention, there is provided a computer program comprising program code means adapted to perform the method according to the first aspect of the present invention when the program is executed by a processor.

Generally, the at least one selected control application may comprise at least two control applications. Further, the at least one internal variable may comprise at least two internal variables.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a flow chart illustrating a method according to an embodiment of the invention;
Fig. 2 is a flow chart illustrating a method according to an embodiment of the present invention;
Fig. 3 schematically illustrates a control application together with an optional communication network which can be used to access the control application, and one or more entities which can be controlled by the control application;
Fig. 4 schematically illustrates a monitoring apparatus according to an embodiment of the present invention;
Fig. 5 schematically illustrates a control system according to an embodiment of the present invention;
Fig. 6 schematically illustrates a control system according to an embodiment of the present invention;
Fig. 7 illustrates a computer readable medium on which a data structure for a monitoring apparatus is stored; and
Fig. 8 illustrates a computer readable medium on which a data structure for a controller is stored.

### Detailed description of preferred embodiments

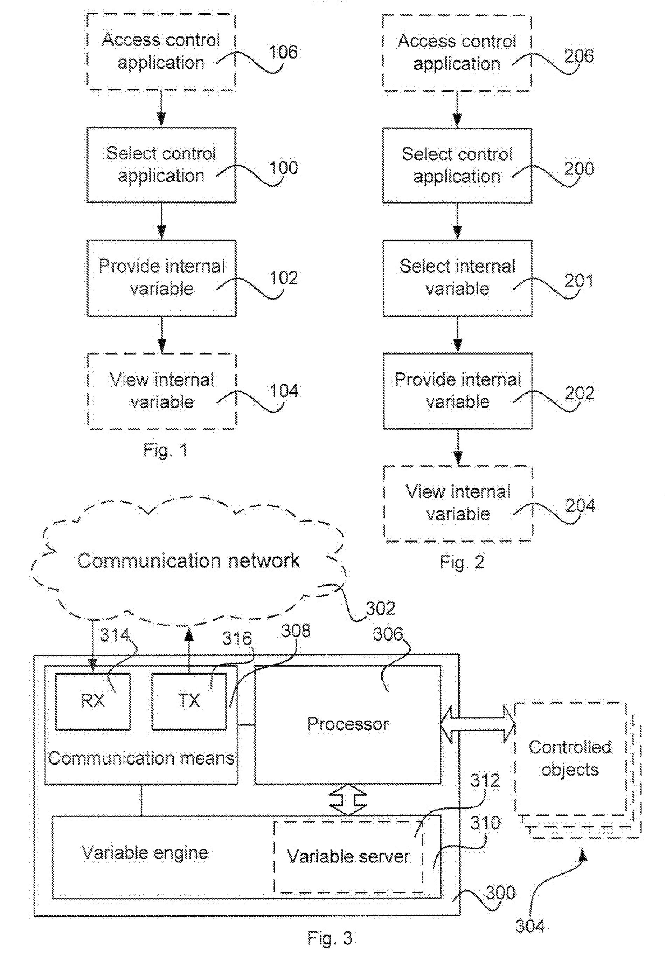

Fig. 1 is a flow chart illustrating a method according to an embodiment of the invention. In a control application selection step 100, at least one control application which is running is selected for checking of function. Here, the control application can be considered a controller, or a program object in a more complex controller, performing control operations. In an internal variable provision step 102, information on at least one internal variable of the control application or control applications is provided. Thus, internal operation of a control mechanism of the control application can be checked when control operations is performed, preferably in its actual control environment and/or in real-time.

Optionally, the one or more provided internal variables can be viewed to an operator or to service personnel supporting the operator in an internal variable viewing step 104. Other personnel using the viewing function can be designers or installation engineers of a control system checking the control mechanisms before delivery. The viewing can be performed through a user interface, and the user interface can be designed to view the internal variables in graphs, figures, or symbols, and using size, colour, and form to enhance understanding and legibility of the control mechanism and its operation. Together with the illustration of the internal variables, the user interface can provide an overview of the control mechansism or the control system. For example, a schematic diagram of the control mechanism or control system is viewed, and values of internal variables are presented in their associated positions. Boolean variables can for example be represented by different line widths of their associated connections in the schematic diagram depending on the boolean value, e.g. a thick line for 'True' and a thin line for 'False'. The selection of control application(s) can also be performed upon user interaction through the user interface, as well as any initiation of access to the control application(s). Input and output values, states, and/or alarms can also be illustrated together with the information discussed above.

The method can optionally comprise measures for further engineering of the control mechanisms. For example, the method can comprise enabling a user to change any internal variable, e.g. by inputting a new value through the user interface. Alternatively, or additionally, the method can comprise enabling a user to lock a value any of the internal variables through the user interface. This can also be done for any other values of e.g. input value, output value, state value, and/or alarm value.

Fig. 2 is a flow chart illustrating a method according to an embodiment of the present invention. In a control application selection step 200, at least one control application which performs control operations is selected for checking of function. As demonstated with reference to Fig. 1, the control application can be considered a controller, or a program object in a more complex controller, performing control operations. In an internal variable selection step 201, at least one internal variable of the control application(s) is selected for checking. Thus, checking can be customized for the purpose of the checking of the control mechanism(s). In an internal variable provision step 202, information on at least one internal variable of the control application or control applications is provided. Thus, internal operation of a control mechanism of the control application can be checked when control operations is performed, preferably in its actual control environment and/or in real-time. Alternatively, all internal variables can be provided, and optionally, any input value, output value, state, and/or alarm can be provided.

Optionally, as in the embodiment discussed with reference to Fig. 1, the one or more selected and provided internal variables, as well as other information, as discussed above, can be viewed to an operator or to service personnel supporting the operator in an internal variable viewing step 204. Other personnel using the viewing function can be designers or installation engineers of a control system checking the control mechanisms before delivery. The viewing can be performed through a user interface, and the user interface can be designed to view the internal variables etc. in graphs, figures, or symbols, and using size, colour, and form to enhance understanding and legibility of the control mechanism and its operation. Together with the illustration of the internal variables, the user interface can provide an overview of the control mechansism or the control system. The selection of control application(s) and/or internal variable(s) can also be performed upon user interaction through the user interface, as well as any initiation of access to the control application(s).

Alternatively and also optionally, the selected and provided internal variables can be used by an automatic monitoring system, which for example can determine that internal signals are out of range and give an alert signal to an operator or support organisation.

Optionally, when communication between a checking site and the controller is configured in a way enabling and/or requireing it, accessed to the at least one control application is performed, for example via a communication network, in a control application access step 106 before checking of the internal variable can be performed. Access to the control application is then possible as long as checking is performed.

Fig. 3 schematically illustrates a control application 300 together with an optional communication network 302 which can be used to access the control application, and one or more entities 304 which can be controlled by the control application 300. The control application 300 comprises a processor 306 arranged to perform control operations. Here, the control application can be considered a controller, or a program object in a more complex controller, performing control operations. The control application 300 further comprises a communication means 308 arranged to perform communication with remote entities, and a variable engine 310 arranged to provide variables used in the processor 306 to the communication means 308, as will be discussed below.

The processor 306 can for example receive input from a central control management entity via the communication means 308, for example about mode of operation. The processor 306 can also receive input from the controlled entity or entities 304 about present values or states. The processor 306 can also output control signal(s) to the controlled entity or entities 304, and optionally status information to the central control management entity via the communication means 308.

By the variable engine 310, internal variables of the processor are extracted. Optionally, the variable engine 310 can comprise a variable server 312 which provides information on the internal variables, e.g. values and/or states, via the communication means 308. The variable server 312 is then adapted to work in a client-server arrangement with for example a client in an entity used by e.g. an operator, a support organisation, or an autumated central control unit performing monitoring. Here, internal variables are considered values and/or states of internal signals of the processor 306 from the processor's processing between any inputs and outputs. For example, an internal variable can be a value of a signal from a processing block processing input sensor signals, which signal is internally input to a processing block for averaging, or be a signal indicating a state of a counter of the processor which is fed to a processing block for enabling or disabling a control signal to a controlled entity. The examples can be numerous, depending on the actual control mechanism, and the list of examples given above is therefore not in any way exhaustive.

The controller 300 can also be operated in some kind of engineering or testing mode, e.g. wherein the receiver is arranged to receive a changed value for any internal variable and the processor is arranged to set the internal variable to the changed value, and/or the receiver is arranged to receive a lock value for any internal variable and the processor is arranged to lock the internal variable to a locked value. This can also be done for any other values of e.g. input value, output value, state value, and/or alarm value.

The communication means 308 can comprise a receiver 314 and a transmitter 316. The receiver 314 is arranged to receive communication from remote entities, e.g. via the communication network 302. The receiver 314 can be arranged to receive communication over wire or wirelessly, or a combination of these. Similarly, the transmitter 316 can be arranged to transmit communication over wire or wirelessly, or a combination of these. Numerous of communication techniques,can be used, but not to obscure the essence of the invention, further discussion on particular communication techniques is omitted here. However, it should be noted that any of the receiver 314 and the transmitter 316 can be adapted to use one or more communication techniques.

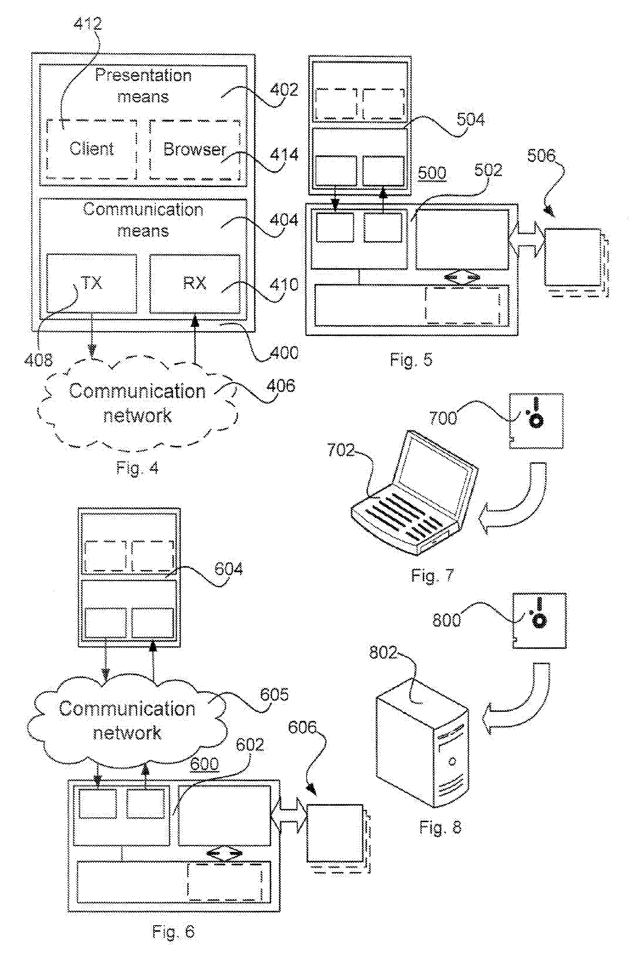

Fig. 4 schematically illustrates a monitoring apparatus 400 according to an embodiment of the present invention. The monitoring apparatus comprises a presentation means 402 and a communication means 404, which can communicate with remote entities, e.g. via an optional communication network 406. Alternatively, instead of, or additionally to the presentation means, a means for automated monitoring (not shown) can be provided. In fully automated operation, there is no need for presentation, and then, presentation means 402 can optionally be omitted.

The communication means 404 can comprise an optional transmitter 408 and a receiver 410. The transmitter 408 is arranged to transmit communication to remote entities, and the receiver 410 is arranged to receive communication from remote entities, e.g. via the communication network 406. The transmitter 408 can be arranged to transmit communication over wire or wirelessly, or a combination of these. Similarly, the receiver 410 can be arranged to receive communication over wire or wirelessly, or a combination of these. Numerous of communication techniques can be used, but not to obscure the essence of the invention, further discussion on particular communication techniques is omitted here. However, it should be noted that any of the receiver 410 and the transmitter 408 can be adapted to use one or more communication techniques.

The optional transmitter 408 is arranged to send a request on a selection of at least one executing control application, which can be executed in one or more remote controllers (not shown). The control application is thus supposed to return information on internal variables of the control application, which information is received by the receiver 410. The presentation means 402 is then arranged to present informationon the internal variables function. Here, the control application can be considered a controller, or a program object in a more complex controller, performing control operations. Information on at least one internal variable of the control application or control applications is thus provided. Thereby, internal operation of a control mechanism of the control application can be checked when control operations is performed, preferably in its actual control environment and/or in real-time.

Optionally, the one or more provided internal variables can be viewed to an operator or to service personnel supporting the operator by the presentation means 402, e.g. on a display (not shown). Other personnel using the viewing function of the presentation means 402 can be designers or installation engineers of a control system checking the control mechanisms before delivery. The viewing of the presentation means can be performed through a user interface, and the user interface can be designed to view the internal variables in graphs, figures, or symbols, and using size, colour, and form to enhance understanding and legibility of the control mechanism and its operation. Together with the illustration of the internal variables, the user interface can provide an overview of the control mechansism or the control system. The selection of control application(s) can also be performed upon user interaction through the user interface, as well as any initiation of access to the control application(s).

Further optionally, the presentation means 402 can comprise a client 412 arranged to work in a client-server arrangement with an internal variable server of the control application being monitored. Thus, the server provides the client 412 with information on the internal variables upon request from the client 412. The requests and the provided information from the server is provided via the communication means 404, and either via the optional communication network 406, as illustrated in Fig. 6, or directly between the monitoring apparatus 400 and the monitored control application, as illustrated in Fig. 5.

Further optionally, the presentation means 402 can comprise a browser 414 which enables a user to navigate among objects on the display linked to control applications and/or internal variables. The navigation can thus provide that the user is able to access the desired information on the internal variables, and thus the operation of the control mechansisms to be checked.

Fig. 5 schematically illustrates a control system 500 according to an embodiment of the present invention. The system comprises a controller 502 and optionally a monitoring apparatus 504, which are in communication. The controller is arranged to control one or more entities 506, which will be referred to as 'control objects'. The schematic illustration view only one controller 502. However, the system 500 can comprise a plurality of controllers. Here, the term 'controller' is to be construed functionally, and can be one or more physical units, as well as several controllers can be in one single unit, and also performed by the same hardware, where the different controllers are formed by two or more control applications. The features of the controller 502 are similar to what is described with reference to Fig. 3. The features of the monitoring apparatus 504 are similar to what is described with reference to Fig. 4.

There can be provided a monitoring apparatus comprising a communication means comprising a receiver arranged to receive information on at least one internal variable of said at least one selected executing control application; and a presentation means arranged to illustrate said at least one internal variable. The monitoring apparatus can comprise a transmitter arranged to send a request on a selection of at least one of at least one executing control application.

The monitoring apparatus can be used for an engineering or testing operation of the system. For example, the monitoring apparatus is arranged to receive a user input comprising a changed value for any of the internal variables, and transmit the changed value to the controller, wherein the controller changes the value of the internal variable to the changed value. Optionally or additionally, the monitoring apparatus is arranged to receive a user input comprising a lock value for any internal variable, and to transmit the lock value to the controller, wherein the controller locks the value of the internal variable to a locked value. The 'lock value' handled by the monitoring apparatus and the controller is preferably an indicator on which internal variable that is to be locked to its current value. When used in combination with the feature of changing the value, the value can be locked to the changed value.

The communication means can further be arranged to send a selection of at least one internal variable of said selected at least one control application, and wherein said receiver is arranged to receive information on said selected at least one internal variable. The communication means can be connected to a communication network.

The monitoring apparatus can be arranged to receive said information on said at least one internal variable in real time during control operation performed by said at least one control application.

The at least one selected control application can comprise at least two control applications. The at least one internal variable can comprise at least two internal variables.

The presentation means can comprise a variable client arranged to illustrate said internal variables. The presentation means can comprise a browser. The viewing of said information on said at least one variable can further comprise viewing said information in an illustration of a context of said at least one variable. The illustration of said context can comprise a schematic view of said control application. Boolean variables can cause connections of said illustration to change appearance.

Fig. 6 schematically illustrates a control system 600 according to an embodiment of the present invention. The system comprises a controller 602 and a monitoring apparatus 604, which are in communication via a communication network 605. The controller is arranged to control one or more entities 606. The schematic illustration view only one controller 602. However, the system 600 can comprise a plurality of controllers. Here, the term 'controller' is to be construed functionally, and can be one or more physical units, as well as several controllers can be in one single unit, and also performed by the same hardware, where the different controllers are formed by two or more control applications. The features of the controller 602 are similar to what is described with reference to Fig. 3. The features of the monitoring apparatus 604 are similar to what is described with reference to Fig. 4. As can be readily understood by a person skilled in the art, features of the embodiment described with reference to Fig. 5 can also be used in the embodiment described with reference to Fig. 6, and vice versa.

Fig. 7 illustrates a computer readable medium 700 on which a data structure is stored. The data structure comprises control instructions for causing a monitoring apparatus 702 to perform the features described with reference to Figs 1, 2 and/or 4.

Fig. 8 illustrates a computer readable medium 800 on which a data structure is stored. The data structure comprises control instructions for causing a controller 802 to perform the features described with reference to Figs 1, 2 and/or 3.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method comprising
selecting at least one of a plurality of executing control applications; and
providing information on at least one internal variable of said at least one of a plurality of executing control applications.

2. The method according to claim 1, further comprising selecting said at least one internal variable of said selected at least one control application.

3. The method according to claim 1 or 2, further comprising viewing said information on said at least one variable through a user interface.

4. The method according to claim 3, wherein said user interface comprises a web browser, wherein said viewing is performed by said web browser.

5. The method according to claim 3 or 4, wherein said viewing of said information on said at least one variable further comprises viewing said information in an illustration of a context of said at least one variable.

6. The method according to claim 5, wherein said illustration of said context comprises a schematic view of said control application.

7. The method according to claim 6, wherein boolean variables causes connections of said illustration to change appearance.

8. The method according to any of claims 3 to 7, further comprising enabling a user to change at least one of said at least one internal variable through said user interface.

9. The method according to any of claims 3 to 8, further comprising enabling a user to lock a value of at least one of said at least one internal variable through said user interface.

10. The method according to any of claims 1 to 9, further comprising accessing said plurality of executing control applications via a communication network.

11. The method according to claim 10, further comprising viewing items associated with said plurality of executing control applications by a web browser.

12. The method according to claim 11, wherein said selecting comprises graphical user interface interaction with said viewed items being associated with the at least one executing control application to be selected.

13. The method according to any of claims 1 to 12, being performed in real time during control operation performed by said plurality of control applications.

14. The method according to any of claims 1 to 13, wherein said at least one selected control application comprises at least two control applications.

15. The method according to any of claims 1 to 14, wherein said at least one internal variable comprises at least two internal variables.

16. A controller comprising
a processor arranged to execute at least one control application,
a variable engine arranged to provide information on at least one internal variable of said at least one executing control application, and
a communication means comprising a transmitter arranged to transmit information on said provided at least one internal variable.

17. The controller according to claim 16, further comprising a receiver arranged to receive a selection of at least one of said at least one executing control application.

18. The controller according to claim 17, wherein said receiver is further arranged to receive a selection of at least one internal variable of said selected at least one control application, and
wherein said variable engine is arranged to provide information on said selected at least one internal variable.

19. The controller according to claim 17 or 18, wherein said receiver is arranged to receive a changed value for at least one of said at least one internal variable wherein said processor is arranged to set said at least one of said at least one internal variable to said changed value.

20. The controller according to any of claims 17 to 19, wherein said receiver is arranged to receive a lock value for at least one of said at least one internal variable wherein said processor is arranged to lock said at least one of said at least one internal variable to a locked value.

21. The controller according to any of claims 16 to 20, wherein said communication means is connected to a communication network.

22. The controller according to any of claims 16 to 21, being arranged to transmit said information on said at least one internal variable in real time during control operation performed by said at least one control application.

23. The controller according to any of claims 16 to 22, wherein said at least one selected control application comprises at least two control applications.

24. The controller according to any of claims 16 to 23, wherein said at least one internal variable comprises at least two internal variables.

25. The controller according to any of claims 16 to 24, wherein said variable engine comprises a variable server arranged to provide said internal variables.

26. The controller according to any of claims 16 to 25, wherein said information on said at least one variable further comprises information on viewing said information in an illustration of a context of said at least one variable.

27. The controller according to claim 26, wherein said illustration of said context comprises a schematic view of said control application.

28. The controller according to claim 27, wherein boolean variables are arranged to cause connections of said illustration to change appearance.

29. The controller according to any of claims 16 to 28, wherein said variable engine further is arrange to provide information on any of a group comprising:
input value, output value, state, and alarm.

30. The controller according to any of claims 16 to 29, further being arranged to handle a subscription on information provided by said variable engine.

31. A control system comprising a controller according to any of claims 16 to 30, and at least one control object controlled by said controller, wherein said controller is arranged to select said at least one executing control application, and transmit information on said provided at least one internal variable.

32. The control system according to claim 31, further comprising a monitoring apparatus arranged to send a request to said controller, wherein said selection of said at least one executing control application is based on said request, and said transmitted information is transmitted to said monitoring apparatus.

33. The control system according to claim 32, wherein said monitoring apparatus is arranged to receive a user input comprising a changed value for at least one of said at least one internal variable, and transmit said changed value to said controller, wherein said controller changes the value of said at least one of said at least one internal variable to said changed value.

34. The control system according to claim 32 or 33, wherein said monitoring apparatus is arranged to receive a user input comprising a lock value for at least one of said at least one internal variable, and transmit said lock value to said controller, wherein said controller locks the value of said at least one of said at least one internal variable to a locked value.

35. The control system according to any of claims 32 to 34, wherein communication between said monitoring apparatus and said controller is performed via a communication network.

36. The control system according to any of claims 32 to 35, wherein the monitoring apparatus is arranged to receive said information on said at least one internal variable in real time during control operation performed by said at least one control application.

37. The control system according to any of claims 32 to 36, wherein said monitoring apparatus comprises a presentation means for viewing information on said at least one internal variable.

38. The control system according to claim 37, wherein the presentation means comprises a variable client arranged to illustrate said internal variables.

39. The control system according to claim 37 or 38, wherein the presentation means comprises a browser.

40. The control system according to any of claims 37 to 39, wherein the viewing of said information on said at least one variable further comprise viewing said information in an illustration of a context of said at least one variable.

41. The control system according to claim 40, wherein the illustration of said context comprises a schematic view of said control application.

42. The control system according to claim 40 or 41, wherein a boolean variable causes an associated connection of said illustration to change appearance.

43. A computer program comprising program code means adapted to perform the method according to any of claims 1 to 15 when the program is executed by a processor.
